# NOUVEAU FASCICULE DE BREVET EUROPEEN

(11) **EP 2 066 261 B2**
(45) Date de publication et mention de la décision concernant l'opposition: **15.01.2020**
(45) Mention de la délivrance du brevet: 22.03.2017
(21) Numéro de dépôt: 07820086.2
(22) Date de dépôt: 10.09.2007
(51) Int. Cl.: A61D 19/02, B65B 3/00

(54) **MACHINE POUR REMPLIR DE SEMENCE DES PAILLETTES D'INSÉMINATION ARTIFICIELLE**
GERÄT ZUM BEFÜLLEN VON BESAMUNGSRÖHRCHEN
MACHINE FOR FILLING ARTIFICIAL INSEMINATION STRAWS WITH SEMEN

(30) Priorité: 13.09.2006 FR 0607982
(43) Date de publication de la demande: 10.06.2009
(73) Titulaire: Cryo Vet, 61300 Saint-Ouen-Sur-Iton (FR)
(72) Inventeur: LECOINTE, Pascal, 35769 Saint Gregoire (FR)
(74) Mandataire: Regimbeau
(86) Numéro de dépôt international: PCT/EP2007/059465
(87) Numéro de publication internationale: WO 2008/031793

(56) Documents cités:
- WO-A1-2009/044043
- FR-A- 1 379 273
- FR-A1- 2 564 064
- FR-A1- 2 700 313
- FR-A1- 2 727 163
- ANONYMOUS: 'SpermNotes - The International AI Newsletter from Minitüb No 10/2005', [en ligne] 17 Octobre 2005, XP055202494 Extrait de l'Internet: <URL:http://www.minitube.de/DE_eng/content/ download/2470/97350/version/4/file/SpermNot es Bovine 2005.pdf> [extrait le 2015-07-15]

## Description

La présente invention concerne une machine pour remplir de semence des paillettes d'insémination artificielle.

La semence est une semence animale, par exemple bovine, telle que du sperme de taureau dilué.

Elle concerne plus précisément une telle machine, du genre comportant une trémie de stockage des paillettes vides, un poste de remplissage des paillettes, ainsi qu'un dispositif de transport pourvu d'organes de réception et de maintien des paillettes et apte à acheminer des paillettes prélevées dans la trémie pour les présenter au poste de remplissage.

Des machines de ce type sont décrites par exemple dans les documents FR-2 700 313 et US 4 478 261, selon lesquels le transporteur est un barillet rotatif rainuré et CH 533 542 selon lequel le transporteur est constitué de plusieurs bandes sans fin mobiles, également rainurées.

WO 2009/044043 et "SpermNotes - The International A1 Newsletter from Minitüb No 10/2005, 17 octobre 2005" concerne également des machines dans lesquelles le transporteur comporte une alternance de logements de taille différente.

Les rainures assurent la réception des paillettes issues de la trémie, leur transfert au poste de remplissage, ainsi que leur maintien durant le remplissage.

Les transporteurs fonctionnent pas à pas, de sorte qu'une paillette, ou un groupe de paillettes, est immobilisé au poste de remplissage durant cette opération.

Une telle machine est généralement adaptée au remplissage de paillettes dont l'une des deux extrémités, dite distale, est obturée par un bouchon initialement perméable à l'air, mais apte à devenir étanche lorsqu'il est imbibé d'un liquide. Le bouchon est par exemple constitué d'une poudre d'alcool polyvinylique intercalée entre deux tampons de matière fibreuse.

Le poste de remplissage comprend des moyens d'introduction de semence à l'extrémité opposée, ou « proximale », des paillettes, ainsi que des moyens d'aspiration de la semence faisant par leur extrémité distale, à travers les bouchons poreux.

Au contact de la semence, ou d'une certaine quantité de liquide intermédiaire non spermicide, conformément aux enseignements du FR 2 810 535, le bouchon durcit et devient imperméable, obturant de manière étanche l'extrémité distale.

En aval du poste de remplissage, se trouve un poste de fermeture de l'extrémité proximale des paillettes, cette fermeture se faisant en général par soudage par ultrasons.

Après remplissage et fermeture, les paillettes sont libérées du transporteur et recueillies dans un réceptacle ad hoc.

Elles sont ensuite congelées en vue d'une utilisation ultérieure.

Les paillettes couramment utilisées sont des tubes fins cylindriques, en matière plastique flexible et transparente, telle que le PVC (chlorure de polyvinyle) notamment.

La majorité des paillettes disponibles sur le marché ont une longueur de 133 mm, et il existe deux catégories de paillettes de différents diamètres, à savoir des paillettes ayant un diamètre de l'ordre de 2 mm (en pratique 1,95 mm) et des paillettes ayant un diamètre de l'ordre de 3 mm (en pratique 2,85 mm).

Un objectif principal de l'invention est de proposer une machine du genre décrit ci-dessus à caractère polyvalent, qui soit capable de traiter ces deux catégories de paillettes, sans que le passage de l'une à l'autre des catégories n'entraîne pour l'opérateur d'intervention significative.

Un autre objectif de l'invention est de proposer une machine compacte, fiable, facile à utiliser et susceptible de travailler à cadence élevée.

Cette machine est adaptée pour traiter au moins deux catégories de paillettes ayant des diamètres différents, les organes de réception et de maintien des paillettes dont est équipé le transporteur étant subdivisés en au moins deux séries distinctes pouvant être mises en oeuvre sélectivement, les organes de l'une des deux séries étant conformés pour s'adapter à des paillettes de grand diamètre, tandis que les organes de l'autre série sont conformés pour s'adapter à des paillettes de petit diamètre.

Il convient de signaler qu'on connaît déjà, par le document FR-2 564 064, un dispositif d'alimentation pour une machine à remplir des tubes. Il s'agit d'un dispositif à chaînes, apte à transporter des tubes de diamètres différents. A cet effet, les chaînes de transport comportent des organes de réception qui sont constitués par une paire de plaquettes à écartement variable. Lorsqu'on change de diamètre de tube, il est nécessaire de régler cet écartement, en jouant sur les positions relatives de deux chaînes adjacentes.

Dans cette réalisation connue, l'ensemble des organes récepteurs est utilisé pour le transport, quel que soit le diamètre des tubes concernés.

Selon l'invention, ledit transporteur est sans fin, et chaque série d'organes d'une catégorie donnée est composée de plusieurs groupes formés d'un certain nombre d'organes adjacents, les groupes d'une catégorie donnée étant alternés avec ceux de l'autre, le poste de remplissage étant conçu pour remplir simultanément le lot de paillettes supporté par un groupe d'organes adjacents, et la machine comporte un moteur électrique piloté par un calculateur et fonctionnant pas à pas, configuré pour entraîner le transporteur avec des phases d'avance successives et réitérées, d'un petit pas égal à la valeur d'entraxe entre deux organes adjacents, puis d'un grand pas, d'amplitude multiple de celle du petit pas, puis d'une phase d'arrêt, qu'elle est adaptée au remplissage de paillettes dont l'une des deux extrémités, dite distale, est obturée par un bouchon initialement poreux, mais apte à devenir étanche lorsqu'il est imbibé d'un liquide, et cette machine comporte un poste disposé en amont du poste de remplissage, ce poste étant adapté pour introduire une petite quantité de liquide non spermicide et non adhérente dans les paillettes, par leur extrémité opposée, dite « proximale ».

Selon d'autres caractéristiques avantageuses et non limitatives de l'invention :
- les groupes des deux catégories possèdent le même nombre d'organes ;
- lesdits d'organes sont des rainures ou des encoches dans lesquelles les paillettes sont encastrées ;
- l'entraxe entre les rainures ou les encoches est constant sur toute la longueur du transporteur, et indépendant de sa catégorie ;
- le transporteur est un barillet rotatif disposé en sortie de trémie et constitué de deux disques coaxiaux solidaires l'un de l'autre, et portant à leur périphérie lesdits organes de réception et de maintien des paillettes ;
- ladite trémie comporte des moyens de distribution une à une des paillettes, qui sont synchronisés avec l'avance du transporteur ;
- ladite trémie est amovible et comporte des moyens d'identification de la catégorie des paillettes qu'elle contient, tandis que la machine est équipée de moyens de détection aptes à coopérer avec lesdits moyens d'identification lors de la mise en place de la trémie, afin de déterminer automatiquement la catégorie des paillettes à traiter ;
- lesdits moyens de détection sont connectés à un circuit de contrôle et de commande du moteur d'entraînement du transporteur, de manière à indexer la position de celui-ci en début d'opération, de telle sorte que soient actifs les organes de réception et de maintien des paillettes qui sont adaptés à leur diamètre, les autres étant en revanche inactifs ;
- ledit poste de remplissage comprend des moyens d'introduction de semence à ladite extrémité proximale des paillettes, ainsi que des moyens d'aspiration de la semence et, le cas échéant, de la petite quantité de liquide introduite précédemment dans les paillettes, cette aspiration se faisant par leur extrémité distale, à travers les bouchons ;
- la machine comporte un poste de soudage par ultrasons de l'extrémité proximale des paillettes, situé en aval du poste de remplissage ;
- ce poste de soudage comporte une sonotrode associée à une enclume, qui sont pourvues d'empreintes complémentaires aptes à enserrer l'extrémité proximale des paillettes, ces empreintes étant subdivisées en deux groupes alternés respectivement adaptés au soudage de paillettes de petit diamètre et de paillettes de grand diamètre, des moyens de commande étant prévus pour déplacer conjointement la sonotrode et l'enclume afin de rendre l'un des deux groupes d'empreintes actif, et l'autre inactif, en fonction de la catégorie de paillettes à traiter ;
- la machine, qui comporte un transporteur consistant en un barillet rotatif disposé en sortie de trémie et constitué de deux disques coaxiaux solidaires l'un de l'autre, et portant à leur périphérie des encoches de réception et de maintien des paillettes, est pourvue de deux rampes fixes ainsi profilées qu'elles assurent, l'une l'extraction de l'extrémité proximale des paillettes hors des encoches de l'un des disques, juste avant que les paillettes ne parviennent au poste de soudage et l'autre l'extraction de l'extrémité distale des paillettes hors des encoches de l'autre disque après que les paillettes ont quitté le poste de soudage, de sorte que les paillettes remplies et soudées tombent alors dans un réceptacle ;
- ledit transporteur est un barillet rotatif disposé en sortie de trémie et constitué de deux disques coaxiaux solidaires l'un de l'autre, dont l'écartement mutuel est sensiblement inférieur à la longueur des paillettes, et portant chacun à leur périphérie 64 encoches de réception et de maintien des paillettes, chaque encoche comprenant une paroi de fond sensiblement semi-circulaire et une embouchure évasée facilitant le centrage des paillettes, lesdites encoches étant subdivisées en deux séries de 32 encoches adaptées à des diamètres différents, à savoir des grandes encoches aptes à recevoir des paillettes ayant un diamètre externe de l'ordre de 3 mm, et des petites encoches aptes à recevoir des paillettes ayant un diamètre externe de l'ordre de 2 mm, chaque série d'encoches étant répartie en huit groupes de 4 encoches, et les groupes de grandes encoches étant alternés avec les groupes de petites encoches, l'entraxe entre deux encoches voisines étant constant sur toute la périphérie du disque et indépendant de la catégorie d'encoche concernée, cet entraxe étant avantageusement de l'ordre de 10 mm.

D'autres caractéristiques et avantages de l'invention apparaîtront à la lecture de la description suivante d'un mode de réalisation préféré de l'invention.

Cette description est faite en référence aux dessins annexés dans lesquels :
- la figure 1 est une vue générale, de face, de la machine ;
- les figures 2 et 3 sont des vues en coupe verticale selon les plans référencés respectivement II et III sur la figure 1 ;
- la figure 4 est une vue en coupe horizontale selon le plan référencé IV-IV sur la figure 1 ;
- la figure 5 est une vue en coupe verticale selon le plan référencé V-V sur la figure 1 ;
- la figure 6 est une vue générale, de dessus, de la machine ;
- la figure 7 est un détail montrant, vue de côté, la trémie mise en place sur la machine ;
- les figures 8 et 9 sont des vues de détail en coupe selon le plan brisé VIII-VIII de la figure 7, se rapportant à deux trémies contenant des paillettes de catégorie différente ;
- la figure 10 est une vue schématique du poste d'introduction d'un liquide non spermicide dans les paillettes ;
- la figure 11 est une vue schématique du poste servant à remplir les paillettes de semence ;
- la figure 12 est un détail qui représente les outils de soudage par ultrasons d'une extrémité des paillettes ;
- la figure 13 est une vue en coupe selon le plan XIII-XIII de la figure 12 ;
- la figure 14 est une vue de côté, en coupe verticale, d'une trémie en place sur la machine, cette vue étant destinée à montrer les moyens d'obturation du canal de sortie de la trémie ;
- la figure 15 est un schéma illustrant la configuration du barillet équipant la machine ;
- la figure 16 est une vue partielle, à grande échelle, qui représente la périphérie d'un disque à encoches constitutif de ce barillet ;
- les figures 17 et 17A sont des détails représentant l'insertion d'une paillette de grand diamètre dans une encoche, respectivement au cours de sa mise en place et après sa mise en place ;
- les figures 18 et 18A sont des détails représentant l'insertion d'une paillette de petit diamètre dans une encoche, respectivement au cours de sa mise en place et après sa mise en place ;
- les figures 19, 19A et 19B sont des schémas illustrant la prise en charge, par le barillet, de paillettes de petit diamètre en sortie de trémie.

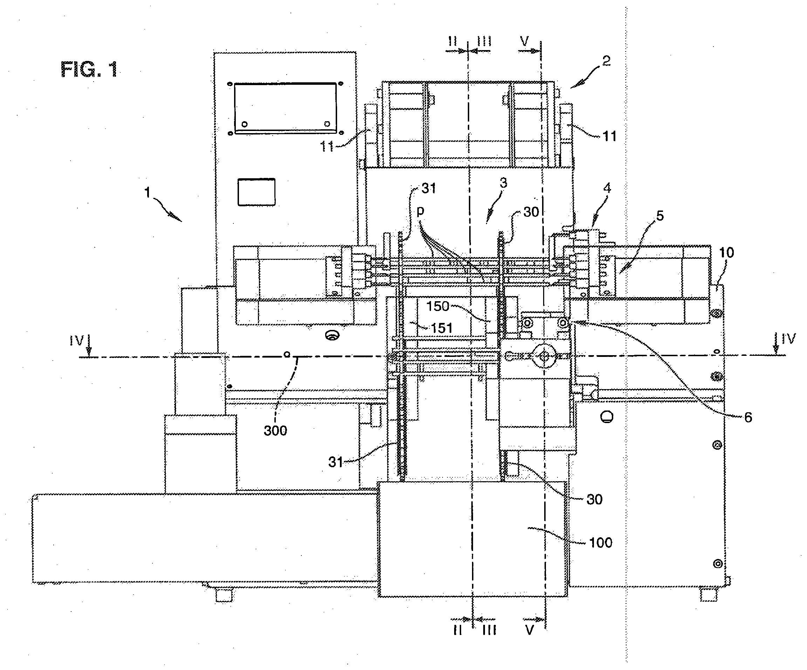

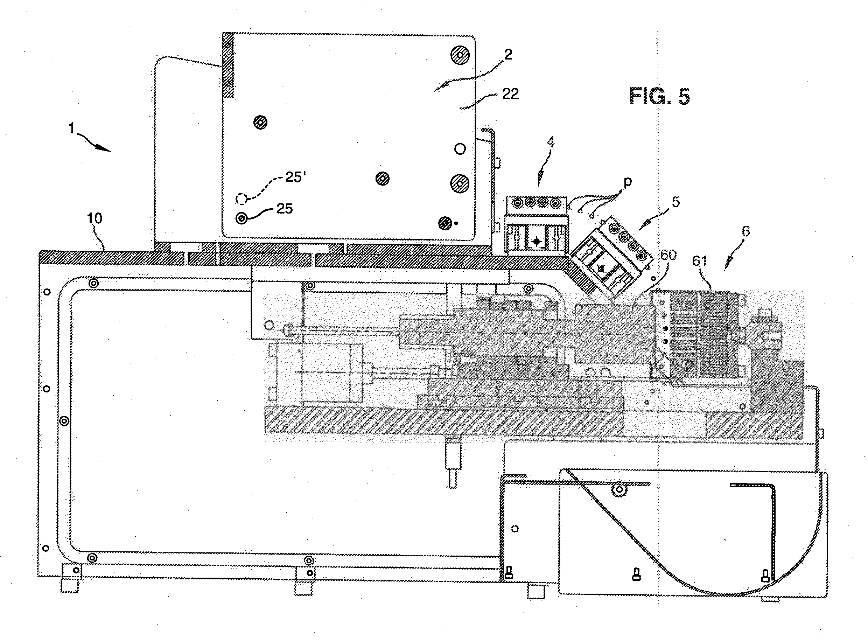

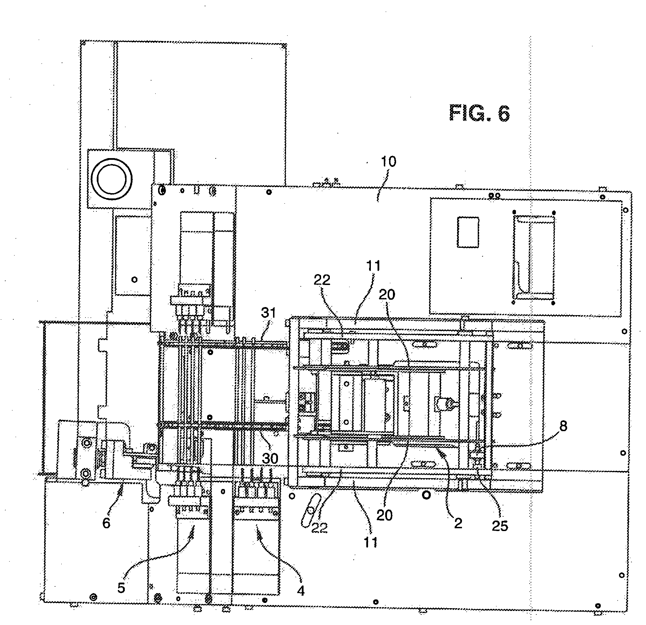

La machine 1 telle qu'illustrée notamment sur les figures 1 à 6 comprend un certain nombre d'appareils et d'équipements dont on fera état seulement des principaux, qui ont un rapport direct avec la présente invention, afin de ne pas alourdir inutilement la description.

Elle comporte un bâti fixe 10 apte à supporter une trémie amovible et interchangeable 2 contenant des paillettes, un barillet transporteur rotatif 3, un poste 4 d'introduction d'un liquide non spermicide dans les paillettes, un poste 5 servant à remplir les paillettes de semence, un poste 6 de soudage par ultrasons d'une extrémité des paillettes et un réceptacle 100 recueillant les paillettes remplies et soudées.

La trémie 2 destinée à contenir des paillettes à remplir a la forme générale d'une boîte parallélépipédique rectangle, ouverte sur le dessus et dont le fond est matérialisé par une paire de guides rectilignes (tiges plates) parallèles inclinés 20. La largeur de cette boîte est très légèrement supérieure à la longueur des paillettes, lesquelles sont placées par lot dans la trémie sur les guides 20, perpendiculairement à ceux-ci.

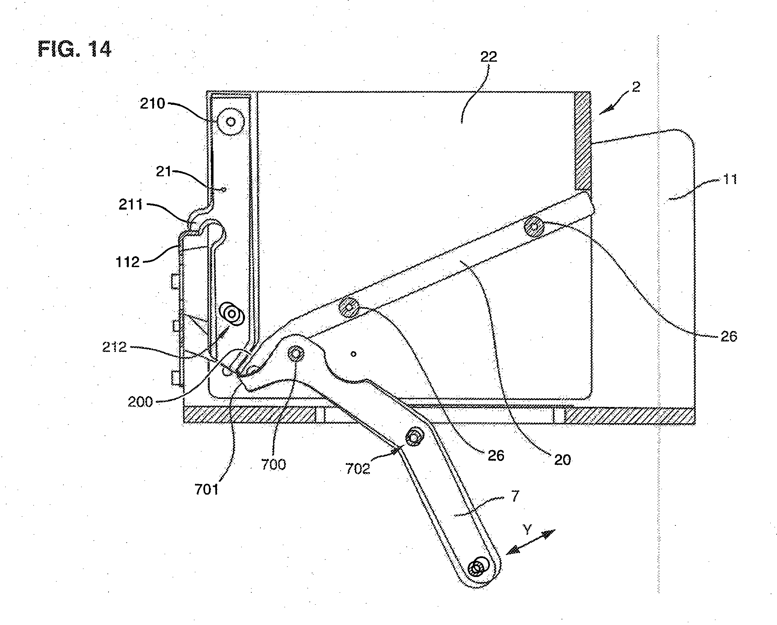

Sur la figure 14, la référence 26 désigne deux tiges transversales servant d'entretoises pour les guides 20 et assurant leur fixation aux parois latérales 22 de la trémie.

A l'avant de la trémie (sur la gauche de la figure 14), est montée une paire de tiges plates verticales 21 disposées chacune dans le même plan vertical que l'un des guides. Chaque tige 21 est articulée en partie supérieure autour d'un axe 210 porté par une paroi 22. Un système de guidage à téton/lumière 212 limite l'amplitude de cette articulation. En sa zone centrale, le levier 21 est muni d'un becquet 211 dirigé vers l'avant.

La portion d'extrémité avant de chaque guide 20 est plus inclinée que sa partie principale, et la portion d'extrémité inférieure de chaque levier 21 est biseautée, de telle sorte que son bord inférieur possède la même inclinaison.

Lorsque la trémie est retirée de la machine, le levier 21 est légèrement incliné vers l'arrière par rapport à la verticale, sous l'effet de son propre poids, et son bord inférieur biseauté vient en appui contre la portion avant du guide 20.

Ainsi la sortie des paillettes (qui ont tendance à descendre le long des tiges) hors de la trémie est empêchée.

En revanche, pour mettre en place une trémie sur la machine, on la positionne entre deux joues latérales 11 solidaires du bâti 10. La trémie 2 est munie, à l'extérieur de chacune de ses parois latérale 22, d'une paire de tétons de centrage et de retenue 220, 221, adaptés pour se loger dans des encoches évasées, ouvertes vers le haut, ménagées dans lesdites joues 11.

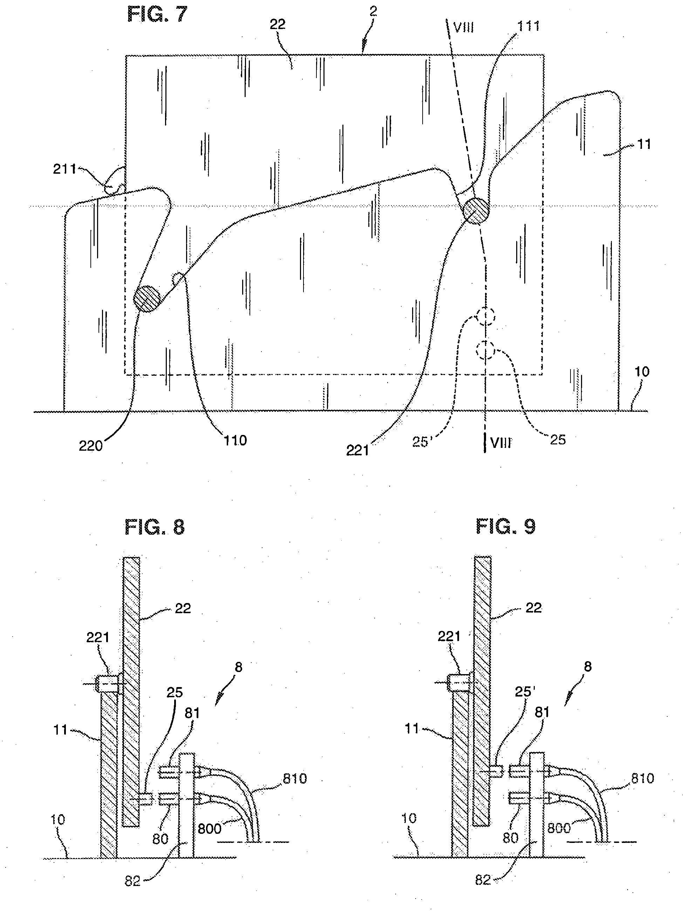

Ainsi, après mise en place, la trémie est retenue par ces tétons, qui sont en appui au fond des encoches, dans une position bien définie, illustrée sur la figure 7.

Durant cette mise en place, les deux becquets 211 viennent prendre appui contre le bord supérieur d'une cloison transversale 112 solidaire du bâti, ce qui a pour effet de redresser légèrement les leviers 21, et libérer la sortie de trémie ; en effet, les leviers 21 sont alors verticaux et leur bord inférieur biseauté est parallèle à la partie avant d'un guide 20, ménageant un petit canal 200 dans lequel les paillettes peuvent descendre et se placer l'une contre l'autre à la queue leu leu.

Les deux canaux 200 forment une goulotte de sortie des paillettes.

Toutefois, la sortie des paillettes est alors contrôlée par une paire de leviers 7, reliés par des entretoises, articulés chacun autour d'un axe transversal 700 solidaire du bâti ; ils possèdent une extrémité supérieure libre 701 en forme doigt.

Un organe de commande 70, tel qu'un vérin ou un électroaimant, est relié à une traverse qui relie les extrémités inférieures de ce jeu de leviers et peut leur imprimer un mouvement oscillant, symbolisé par la double flèche Y sur la figure 14, pour les faire pivoter conjointement, dans un sens ou dans l'autre, autour de l'axe 700.

Des systèmes de guidage à téton/lumière 702 limitent l'amplitude de cette articulation.

Chaque levier 7 est positionné vers l'intérieur de la trémie, par rapport à un guide 20, tout près de celui-ci.

Selon l'état de l'organe de commande 70 (rétracté ou en extension), les doigts 701 obturent ou, au contraire, libèrent les deux canaux de sortie 200 de la trémie.

Le pilotage de cet organe de commande est tel que les paillettes ne peuvent être libérées qu'individuellement (une à une), à une fréquence déterminée.

L'une des parois latérales 22 de la trémie est munie, au niveau de son angle inférieur arrière, sur sa face interne, d'un pion 25 qui fait office de moyen d'identification de la catégorie des paillettes qu'elle contient.

Comme on le voit sur les figures 8 et 9, la position du pion - référencé 25'- sur la figure 9 est différente de celle du pion 25 de la figure 8.

Dans le mode de réalisation illustré, ils sont décalés en hauteur.

Une position est utilisée lorsque la trémie 2 contient des paillettes de petit diamètre (de l'ordre de 2 mm) ; l'autre position est utilisée lorsque la trémie contient des paillettes de grand diamètre (de l'ordre de 3 mm).

Sur le bâti 10 est monté un dispositif de détection 8 comprenant une paire de détecteurs 80, 81 portés par un support 82. Se sont des détecteurs à fibre optique, placés en regard des positions susceptibles d'être prises par les pions 25 et, respectivement 25'.

Des câbles optiques 800, 810 sont connectés à un circuit de commande et de contrôle de la machine, pour lui adresser un signal correspondant ; ce circuit est donc renseigné automatiquement sur la catégorie des paillettes à traiter.

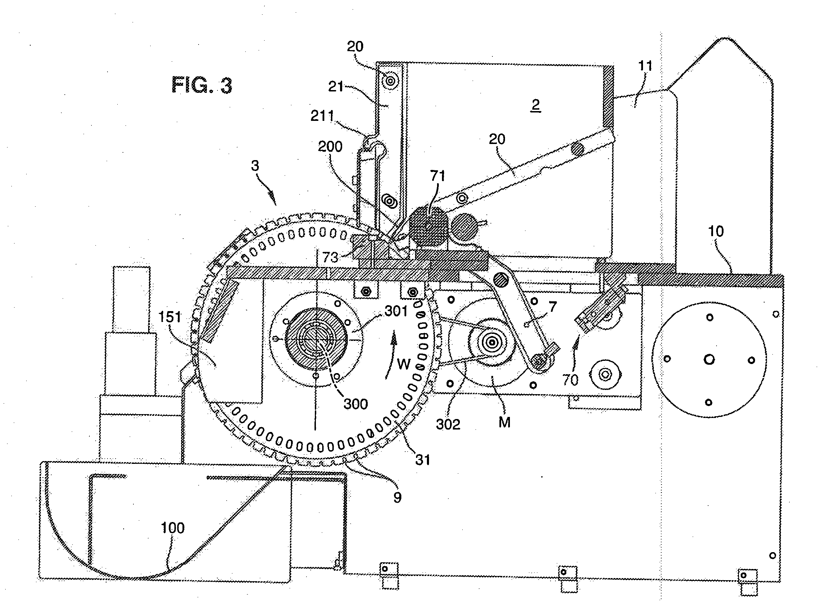

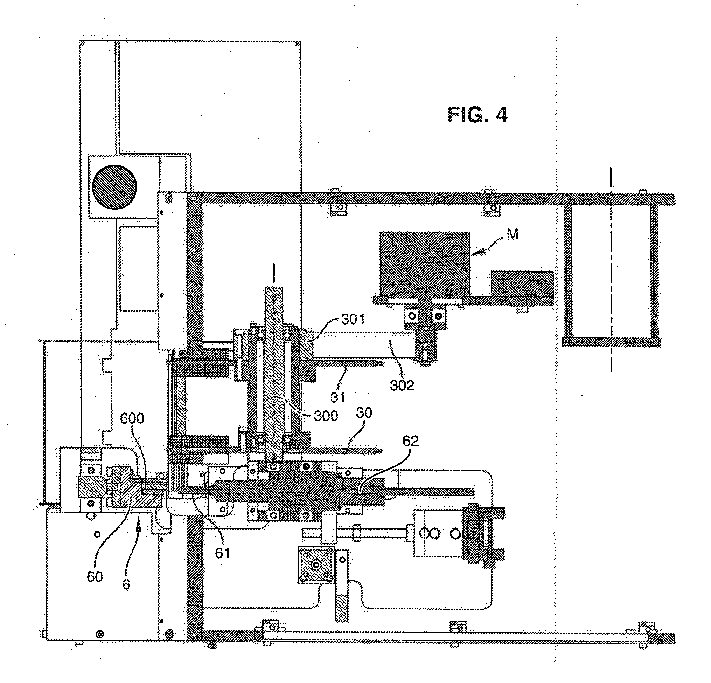

La machine 1 est équipée d'un transporteur 3 qui consiste en un barillet rotatif constitué d'une paire de disques coaxiaux 30, 31, d'axe horizontal et transversal 300. Ils sont portés par un moyeu 301 entraîné en rotation, via une courroie de transmission 302, par un moteur électrique M (voir notamment figures 3 et 4).

Ce moteur est un moteur fonctionnant pas à pas, à vitesse et amplitude variables et réglables.

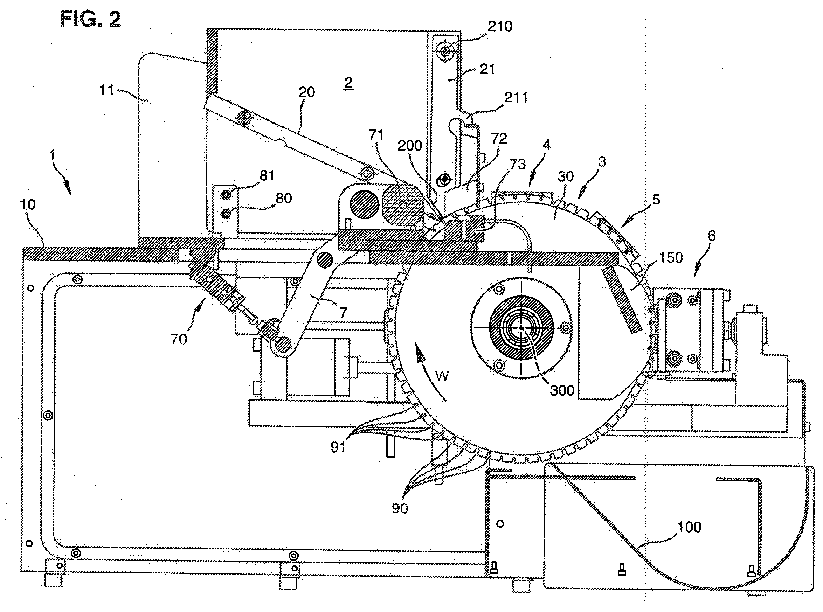

Comme on le voit en particulier sur les figures 2 et 3, sur lesquelles le sens de rotation du barillet est symbolisé par la flèche W, la zone supérieure ascendante de ce barillet est sensiblement tangente à la sortie des canaux 200.

Ces mêmes figures montrent, en coupe, un barreau transversal, de section carrée à angles tronqués, disposé dans la zone inférieure de la trémie 2, entre les guides 20. Ce barreau est monté rotatif ; il a pour fonction de brasser les paillettes contenues dans la trémie pour bien les aligner à l'entrée des canaux de sortie 200.

Comme on le voit sur la figure 1, sur laquelle les paillettes portent la référence p, la paire de disques 30 - 31 est décalée latéralement par rapport au plan vertical de symétrie de la trémie 2.

De plus, leur écartement mutuel est sensiblement inférieur à la largeur de la trémie (et donc à la longueur des paillettes p).

Par suite de cette disposition, l'une des extrémités des paillettes, que l'on appellera « distale » (sur la gauche de la figure 1) ne déborde pas, ou déborde très peu, au-delà du disque 31 qui la retient ; en revanche, leur autre extrémité, que l'on appellera « proximale » (sur la droite de la figure 1) déborde largement au-delà du disque 30 qui la retient.

Les deux disques 30 et 31 sont identiques.

Leur plan est perpendiculaire à l'axe des paillettes contenues dans la trémie 2.

Ils sont pourvus à leur périphérie d'une pluralité d'encoches 9 régulièrement disposées.

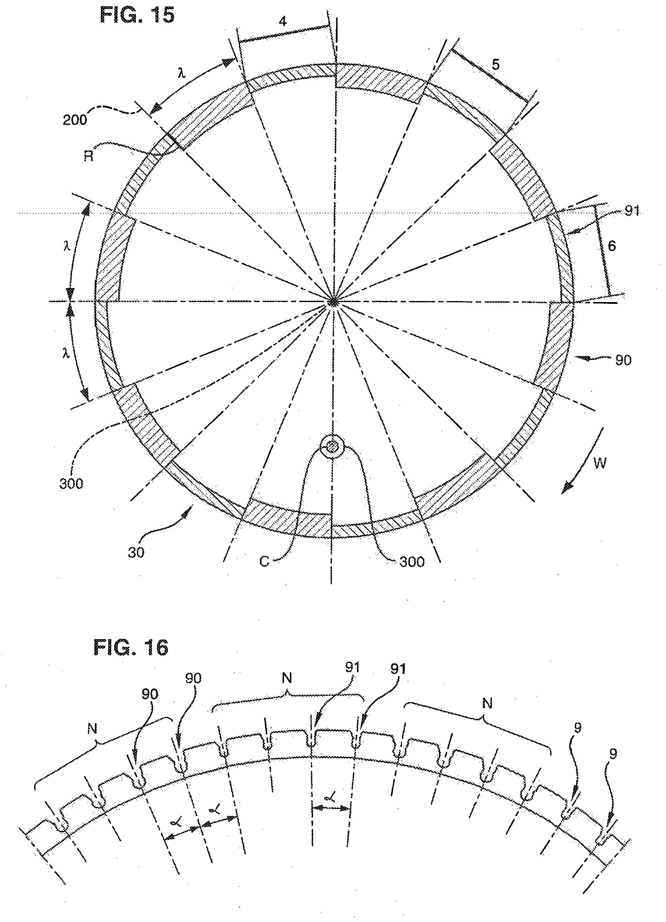

Comme on le voit sur les figures 15 et 16, il existe deux séries d'encoches.

Dans le mode de réalisation illustré, il y a au total 64 encoches qui sont subdivisées en deux séries de trente deux encoches adaptées à des diamètres différents, à savoir des grandes encoches 90 aptes à recevoir des paillettes p ayant un diamètre externe de l'ordre de 3 mm, et des petites encoches 91 aptes à recevoir des paillettes p ayant un diamètre externe de l'ordre de 2 mm, chaque série d'encoches étant répartie en huit groupes de quatre encoches.

Les groupes de grandes encoches 90 sont alternés avec les groupes de petites encoches 91, et l'entraxe entre deux encoches voisines est constant sur toute la périphérie du disque et indépendant de la catégorie d'encoche concernée.

Ainsi, l'écart angulaire entre les axes des encoches est de 5,625 degrés.

La valeur d'entraxe (longueur d'arc de cercle développée) est par exemple de 10 mm.

A titre indicatif, cela correspond à un diamètre de disque légèrement supérieur à 200 mm.

Il va de soi que les deux disques 30 et 31 sont calés sur leur moyeu de sorte que les groupes d'encoches similaires soient en correspondance.

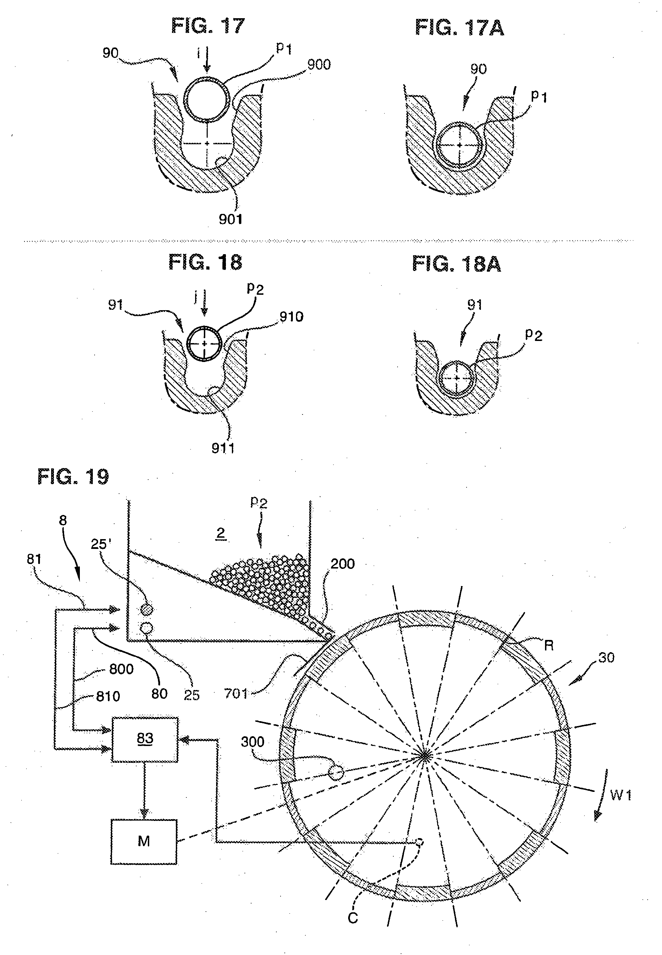

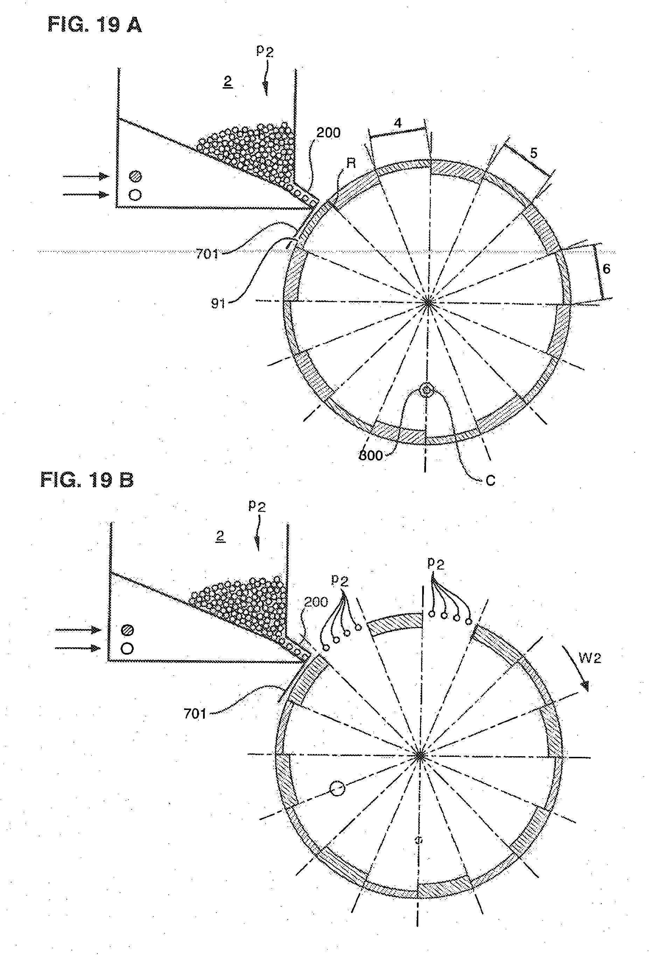

Sur la figure 15, ainsi que sur les figures 19, 19A et 19B, on a symbolisé par des plages angulaires épaisses et minces les groupes d'encoches 90 et respectivement 91 dont est pourvu l'un des disques, en l'occurrence le disque 30.

Chaque plage angulaire a la même longueur développée (longueur d'arc) λ, qu'elle comporte de petites ou de grandes encoches.

Chacun des postes de traitement 4, 5 et 6 a également une largeur sensiblement égale à la valeur λ, car elle est adaptée pour traiter l'ensemble des paillettes logées dans les encoches d'une plage.

Le disque 30 est percé d'un orifice 300 qui, lors de la rotation du disque, défile à chaque tour devant un capteur fixe C, par exemple un capteur inductif.

La mise en coïncidence du capteur C et de l'orifice 300 correspond à une position « zéro » ou indexée du disque 30, telle qu'un endroit donné du disque, marqué R sur la figure 15, se trouve en regard du canal de sortie 200 de la trémie 2.

On suppose que cet endroit correspond à la première encoche d'un groupe de petites encoches.

Le poste 4 se trouve à une distance développée (c'est-à-dire une longueur d'arc) λ de cet endroit R, tandis que les postes 5 et 6 se trouvent à une distance développée 3 λ, et, respectivement, 5 λ de celui-ci.

Comme on le voit sur les figures 17 et 18, les grandes et les petites encoches 90, 91, possèdent une entrée évasée 901, respectivement 910, qui facilite le centrage et la pénétration d'une paillette p1 de grand diamètre (flèche i) et, respectivement, d'une paillette p2 de petit diamètre (flèche j). Elles possèdent une zone de fond 901, respectivement 911, sensiblement semi-cylindrique apte à enserrer et retenir convenablement la paillette p1, respectivement p2 (figures 17A et 18A).

La figure 2 montre la présence de rampes fixes 72 (bordant les disques 30 et 31), dont le rôle est de repousser progressivement chaque paillette ayant quitté la trémie pour bien l'encastrer dans son encoche réceptrice.

Comme on le voit en particulier sur la figure 2, les postes opératoires 4, 5 et 6 sont disposés respectivement sensiblement au niveau de la partie haute du barillet, vers le milieu de sa partie supérieure descendante et vers le milieu de sa partie descendante.

Le barillet amène successivement à chacun de ces postes un groupe de quatre paillettes, précédemment prélevées en sortie de trémie, puis s'arrête un certain temps, suffisant bien entendu pour que l'opération la plus longue des trois puisse être menée à terme.

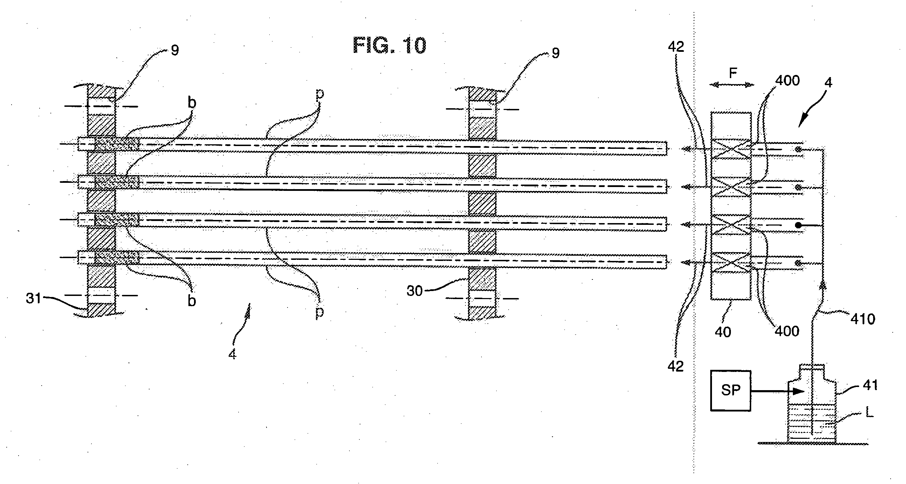

L'opération exécutée au poste 4 est illustrée sur la figure 10.

On y traite simultanément un groupe de quatre paillettes p retenues chacune dans une paire d'encoches 9 des disques 30 et 31.

Leur portion d'extrémité distale (à gauche sur la figure) est garnie intérieurement d'un bouchon poreux b.

Conformément aux enseignements du FR 2 810 535 déjà cité, auquel on pourra se reporter au besoin, dans le but d'économiser de la semence, on injecte à l'extrémité proximale opposée une petite quantité de liquide non spermicide et non adhérent.

A cet effet, on utilise une tête d'injection comprenant un coulisseau mobile axialement, pourvu de quatre aiguilles creuses 42 adaptées pour pénétrer chacune à l'intérieur de l'extrémité proximale d'une paillette p. Ce liquide L est contenu dans un flacon approprié 41, intégré ou non à la machine, et pressurisé au moyen d'une source de pression SP.

Cette pression est relativement faible, à titre indicatif de l'ordre de 20 millibars (2000 Pa).

Le flacon 41 est connecté aux aiguilles 42 au moyen de conduits flexibles 410, via des électrovannes 400.

La double flèche F symbolise le mouvement de va-et-vient du coulisseau 40 afin d'introduire les aiguilles 42 dans les paillettes et pour les en retirer une fois que la dose voulue de liquide y a été déposée.

Le volume de cette dose est fonction de la durée d'ouverture des électrovannes 400 et de la pression mise en oeuvre pour refouler le liquide L.

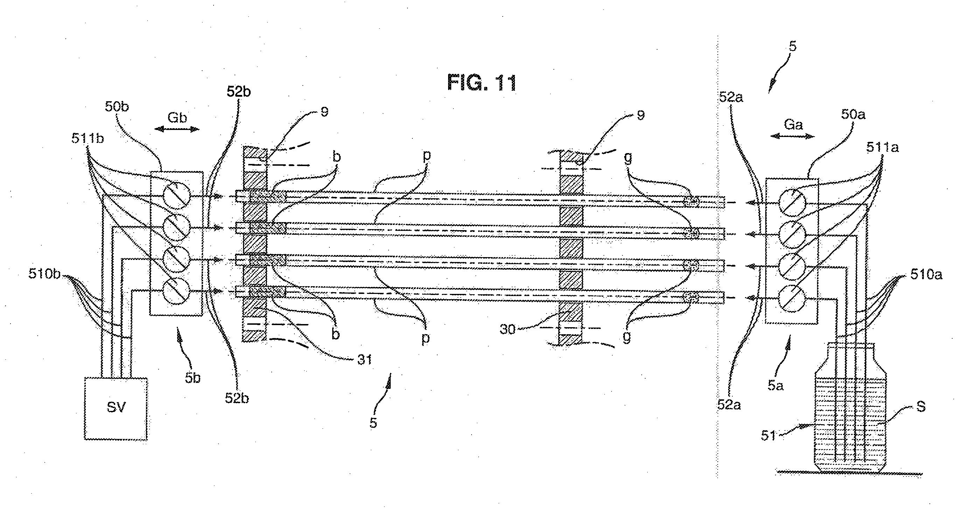

L'opération exécutée au poste 5 est illustrée sur la figure 11.

Ce poste comprend deux outillages complémentaires situés aux extrémités proximale et distale des paillettes, dont les références sont affectées respectivement de l'indice a et b.

L'outillage proximal comprend un coulisseau 50a axialement mobile, dont les déplacements sont symbolisés par la double flèche Ga.

Ce coulisseau porte quatre aiguilles creuses 52a aptes à pénétrer chacune sans jeu (c'est-à-dire de manière étanche, ou pratiquement étanche, à l'air) dans la portion d'extrémité proximale d'une paillette p, dans laquelle a été préalablement déposée une goutte g du liquide L.

La semence S est contenue dans un récipient 51, intégré ou non à la machine, et connecté aux aiguilles 52a au moyen de conduits flexibles 510a, via des dispositifs de pincement des conduits, ou clamps 511a, actionnés par électroaimant.

De manière similaire, l'outillage distal comprend un coulisseau 50b axialement mobile, dont les déplacements sont symbolisés par la double flèche Gb.

Ce coulisseau porte quatre aiguilles creuses 52b aptes à pénétrer chacune sans jeu (c'est-à-dire de manière étanche, ou pratiquement étanche, à l'air) dans la portion d'extrémité distale d'une paillette p.

Les aiguilles 52b sont reliées au moyen de conduits flexibles 510b, via des clamps 511b actionnés par électroaimant, à une source de vide SV.

Le remplissage des paillettes se fait ainsi par aspiration de la semence à l'extrémité distale, à travers leur bouchon poreux b. La semence S pénètre dans chaque paillette par l'extrémité proximale et repousse progressivement la goutte g vers l'autre extrémité, de sorte que celle-ci vient en fin de course imbiber le bouchon b.

La valeur de la dépression et le temps d'ouverture des clamps 511a et 511b sont choisis de façon à optimiser le temps nécessaire au remplissage des paillettes.

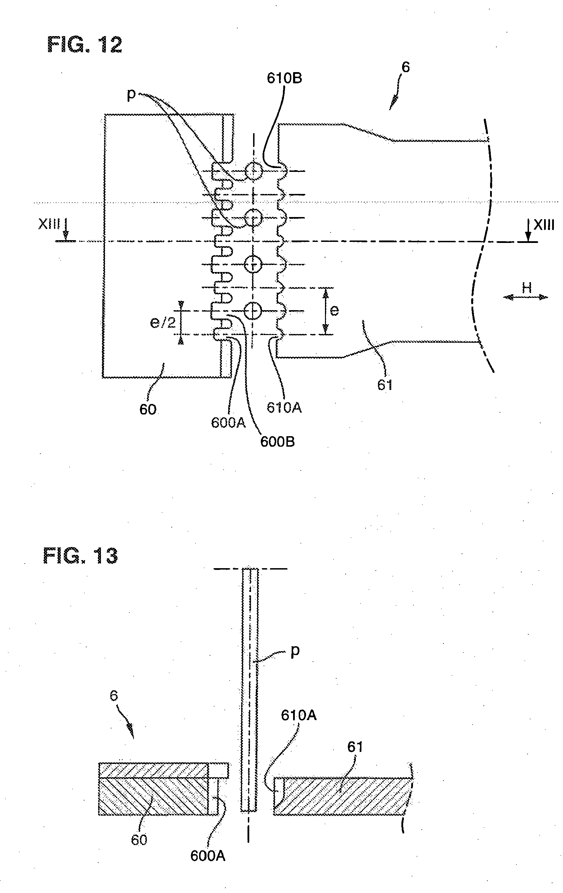

Les figures 12 et 13 représentent un outillage de soudage par ultrasons de l'extrémité proximale des paillettes, qui se trouve au poste 6.

Cet outillage comprend une sonotrode 61 et une enclume 60.

Ces deux éléments comportent deux séries de quatre empreintes complémentaires, l'une 610A - 600A destinée au soudage de paillettes p de petit diamètre, l'autre 610B - 600B destinée au soudage de paillettes p de grand diamètre.

La sonotrode 61 peut être rapprochée et écartée de l'enclume 60 au moyen d'un organe de commande approprié, tel qu'un vérin par exemple, comme symbolisé par la double flèche H, afin d'écraser l'extrémité de la paillette pour le soudage et pour la libérer après soudage.

Les empreintes d'une catégorie donnée (grandes ou petites) sont espacées d'une valeur e qui est égale au pas des encoches, soit 10 mm par exemple.

Les deux séries sont alternées, de sorte que l'entraxe entre une petite et une grande empreinte est égale à e/2, soit 5 mm par exemple.

Grâce à cet agencement, il suffit de déplacer verticalement et conjointement la paire d'outils 60 - 61 sur une course de e/2 en fonction de la catégorie des paillettes concernées pour que ces dernières se présentent correctement en vis-à-vis du groupe d'empreintes adéquat lorsqu'elles arrivent au poste 6.

Il convient de noter que la machine est pourvu d'une paire de rampes profilées 150, 151 situées sur les bords des disques 30, respectivement 31, dans la zone descendante qui correspond à ce poste 6 (voir figure 1).

La rampe 150 située du côté proximal est ainsi conformée qu'elle fait progressivement sortir les paillettes de leur encoche 9, sur le disque 30, un peu avant qu'elles n'arrivent au poste 6. Elles ne sont donc retenues que par leur extrémité opposée qui est encastrée dans une encoche du disque 31.

Grâce à cet arrangement, la partie proximale des paillettes possède une certaine souplesse qui favorise leur bon centrage dans les empreintes de l'outillage de soudage et améliore la fiabilité de l'opération.

La rampe 151, quant à elle, assure l'extraction ultérieure (après le soudage) de l'extrémité distale des paillettes, hors des encoches du disque 31, de sorte que les paillettes sont alors complètement libérées et tombent sous l'effet de la gravitation dans le réceptacle 100.

Un calculateur, référencé 83 sur la figure 19, pilote le fonctionnement de la machine, en particulier la commande du moteur M faisant tourner le barillet, la commande des moyens 70 d'actionnement du levier 7, en synchronisme avec la rotation du barillet, ainsi que les outillages présents aux postes 5, 6 et 7.

En référence aux figures 19, 19A et 19B, nous allons expliquer de quelle manière se fait l'indexage automatique du barillet en fonction de la catégorie des paillettes concernées, et comment s'opère le traitement des paillettes.

On suppose qu'au départ le barillet se trouve immobilisé dans une position angulaire quelconque.

Les leviers 7 occupent une position telle que leur extrémité 701, symbolisée par un segment sur la figure 19, obture chacune un canal de sortie 200 de la trémie.

On a mis en place sur la machine une trémie 2 qui est garnie d'un lot de paillettes p2 de petit diamètre.

Dans ce lot, les paillettes sont orientées de telle sorte que leur extrémité distale, munie d'un bouchon, soit tournée du côté du disque 31.

Le détecteur 8 reconnaît cette catégorie « petit diamètre », et adresse au calculateur 83 un signal d'information correspondant.

Ce sont par conséquent les groupes de petites encoches 91 qui doivent être utilisées pour traiter ce lot de paillettes.

Le calculateur commande par ailleurs, s'il y a lieu, le déplacement des outils de soudage 61- 60 afin qu'ils se placent dans la position adaptée à la fermeture de paillettes de petit diamètre.

A la mise en route du moteur M, le calculateur pilote ce dernier pour qu'il fasse tourner le disque 30 (et donc le barillet entier), comme symbolisé par la flèche W1 sur la figure 19, jusqu'à ce que l'orifice 300 vienne en regard du capteur C.

Le moteur est alors temporairement arrêté, dans la position « zéro » du disque.

Or, dans cette position, illustrée sur la figure 19A, le repère R se trouve dans une position favorable au prélèvement de paillettes p2, puisqu'il correspond à la première encoche d'un groupe de quatre petites encoches.

L'opération peut alors commencer.

Dans une première phase, le calculateur pilote l'avance intermittente, à petit pas, du barillet, ainsi que l'ouverture et la fermeture alternées de l'obturateur 701, de sorte que quatre paillettes p2 soient placées l'une après l'autre dans le premier groupe de petites encoches. La rampe fixe 72 dont il a été fait état plus haut assure un encastrement progressif mais complet de chaque paillette dans les encoches.

Ce « petit pas » est égal à la valeur de l'entraxe entre encoches ; il correspond à une rotation d'angle α (soit 5,625°) du barillet 3.

Dans une deuxième phase, le calculateur pilote la fermeture de l'obturateur 701 ainsi que l'avance du barillet 3, d'un grand pas.

Ce « grand pas » est égal à la valeur de l'entraxe λ d'une plage d'encoches ; il correspond à une rotation d'angle 4α du barillet 3, soit 22,5°.

Durant cette phase, symbolisée par la flèche W2 sur la figure 19B, la plage de grandes encoches non utilisées passe à vide sous la sortie de trémie 200, tandis que le groupe de quatre paillettes p2 arrive au poste 4, et s'y positionne, chaque paillette se plaçant en vis-à-vis d'une aiguille 42.

Dans une troisième phase, le moteur M est arrêté, pendant un temps suffisant pour que l'opération d'introduction d'une goutte de liquide L puisse se faire correctement dans chacune des paillettes p2.

Ce processus comprenant une phase d'avance à petits pas (avec distribution de paillettes vides), une phase d'avance à grand pas, et une phase d'arrêt, est renouvelé une première fois de sorte qu'un nouveau groupe de paillettes vides arrive au poste 4 et que le groupe de paillettes traitées au poste 4 arrive au poste 5.

Les opérations dans ces deux postes se font simultanément durant la phase d'arrêt du barillet.

Le processus est renouvelé une deuxième fois de sorte qu'un nouveau groupe de paillettes vides arrive au poste 4, que le groupe de paillettes qui viennent d'être traitées au poste 4 arrive au poste 5, et que le groupe de paillettes qui viennent d'être remplies au poste 5 arrive au poste 6.

Les opérations dans ces trois postes se font simultanément durant la phase d'arrêt du barillet.

Le processus est renouvelé une troisième fois de sorte qu'un nouveau groupe de paillettes vides arrive au poste 4, que le groupe de paillettes qui viennent d'être traitées au poste 4 arrive au poste 5, que le groupe de paillettes qui viennent d'être remplies au poste 5 arrive au poste 6, et que le groupe de paillettes qui viennent d'être soudées au poste 6 soit éjecté et recueilli dans le réceptacle 100.

Le régime de croisière est ainsi atteint, et ce processus est ainsi réitéré jusqu'à épuisement de la quantité de semence, qui provient d'un animal donné, contenue dans le récipient 51 et distribuée au poste 5.

A titre indicatif, un volume de semence correspondant à un éjaculat de taureau permet de remplir entre 400 et 550 paillettes environ.

Après l'opération, on substitue aux outils ayant été en contact avec la semence (aiguilles, électrovannes et conduits flexibles notamment) aux postes 4 et 5 de nouveaux outils stérilisés.

Le diamètre des nouvelles aiguilles est adapté à la catégorie du nouveau lot de paillettes que l'on va traiter.

Dans le cas où les nouvelles paillettes sont également de petit diamètre, l'opération se déroule de la même façon que celle qui vient d'être décrite.

Si on a affaire à des paillettes de grand diamètre, ce que reconnaît automatiquement le calculateur 83 grâce au détecteur 8, le calculateur modifie le positionnement des outils de soudage d'un demi-pas (e/2).

De plus, l'indexage initial du barillet est modifié.

A partir de la position représentée sur la figure 19A, on imprime au barillet une rotation supplémentaire correspondant à l'angle d'une plage d'encoches, soit 22,5°, de sorte que ce soit la première encoche d'une plage de grandes encoches qui vient en vis-à-vis de la sortie 200 de la trémie.

A partir de cette position initiale, le processus se déroule exactement comme le précédent, les plages de petites encoches (non utilisées) défilant cette fois « à vide » devant la sortie de trémie durant les avances à « grand pas » du barillet.

La référence 73 sur les figures 2 et 3 désigne un détecteur de sortie des paillettes hors de la trémie.

Il s'agit par exemple d'un détecteur à fibre optique apte à détecter des anomalies, en particulier la non distribution inopinée d'une paillette sur le barillet, et fournit un signal correspondant au calculateur 83, lequel provoque alors l'arrêt immédiat du moteur.

A titre indicatif, une telle machine est capable de traiter environ 240 paillettes par minute.

Il va de soi que le nombre et la disposition des encoches ne sont pas forcément les mêmes que ceux mis en oeuvre sur le barillet qui vient d'être décrit. On pourrait prévoir plus de deux séries d'encoches de tailles différentes, par exemple trois séries d'encoches permettant de traiter trois catégories de paillettes de diamètres différents.

Le barillet, au lieu d'être constitué d'une paire de disques coaxiaux, pourrait consister en un tambour cylindrique rainuré, comportant deux séries (ou plus) de rainures de largeur différentes disposées selon des génératrices du tambour.

Le transporteur n'est pas forcément un barillet ; il pourrait notamment s'agir d'un tapis sans fin rainuré ou d'une paire de courroies sans fin à encoches.

## Revendications

1. Machine pour remplir de semence des paillettes d'insémination artificielle (p), qui comporte une trémie de stockage des paillettes vides (2), un poste de remplissage des paillettes (5), ainsi qu'un dispositif de transport (3) pourvu d'organes (9) de réception et de maintien des paillettes (p), configuré pour acheminer des paillettes prélevées dans la trémie pour les présenter au poste de remplissage (5), qui est adaptée pour traiter au moins deux catégories de paillettes (p1, p2) ayant des diamètres différents, lesdits organes (9) de réception et de maintien des paillettes étant subdivisés en au moins deux séries distinctes pouvant être mises en œuvre sélectivement, les organes (90) de l'une des deux séries étant conformés pour s'adapter à des paillettes (p1) de grand diamètre, tandis que les organes (91) de l'autre série sont conformés pour s'adapter à des paillettes (p2) de petit diamètre, **caractérisée par le fait que** ledit transporteur (3) est sans fin, que chaque série d'organes (90 ; 91) d'une catégorie donnée est composée de plusieurs groupes formés d'un certain nombre d'organes adjacents (90 ; 91), les groupes d'une catégorie donnée étant alternés avec ceux de l'autre, le poste de remplissage (5) étant conçu pour remplir simultanément le lot de paillettes supporté par un groupe d'organes adjacents, qu'elle comporte un moteur électrique (M) piloté par un calculateur (83) et fonctionnant pas à pas, configuré pour entraîner le transporteur (3) avec des phases d'avance successives et réitérées, d'un petit pas égal à la valeur d'entraxe entre deux organes adjacents (90, 91), puis d'un grand pas, d'amplitude multiple de celle du petit pas, puis d'une phase d'arrêt, qu'elle est adaptée au remplissage de paillettes dont l'une des deux extrémités, dite distale, est obturée par un bouchon (b) initialement poreux, mais apte à devenir étanche lorsqu'il est imbibé d'un liquide, et qu'elle comporte un poste (4) disposé en amont du poste de remplissage (5), ce poste (4) étant adapté pour introduire une petite quantité (g) de liquide non spermicide (L) et non adhérente dans les paillettes, par leur extrémité opposée, dite « proximale ».

2. Machine selon la revendication 1, **caractérisée par le fait que** les groupes des deux catégories possèdent le même nombre d'organes (90 ; 91).

3. Machine selon la revendication 1 ou 2, **caractérisée par le fait que** lesdits d'organes (9) sont des rainures ou des encoches dans lesquelles les paillettes sont encastrées.

4. Machine selon la revendication 3, **caractérisée par le fait que** l'entraxe entre les rainures ou les encoches (9) est constant sur toute la longueur du transporteur, et indépendant de sa catégorie.

5. Machine selon l'une quelconque des revendications précédentes, **caractérisée par le fait que** le transporteur (3) est un barillet rotatif disposé en sortie de trémie et constitué de deux disques coaxiaux (30, 31) solidaires l'un de l'autre, et portant à leur périphérie lesdits organes (9) de réception et de maintien des paillettes.

6. Machine selon l'une quelconque des revendications précédentes, **caractérisé par le fait que** ladite trémie (2) comporte des moyens de (7, 70) de distribution une à une des paillettes (p), qui sont synchronisés avec l'avance du transporteur (3).

7. Machine selon l'une quelconque des revendications précédentes, **caractérisée par le fait que** ladite trémie (2) est amovible et comporte des moyens (25, 25') d'identification de la catégorie des paillettes qu'elle contient, tandis que la machine est équipée de moyens de détection (8) aptes à coopérer avec lesdits moyens (25, 25') d'identification lors de la mise en place de la trémie, afin de déterminer automatiquement la catégorie des paillettes à traiter.

8. Machine selon la revendication 7, **caractérisée par le fait que** lesdits moyens de détection (8) sont connectés à un circuit (83) de contrôle et de commande du moteur (M) d'entraînement du transporteur (3), de manière à indexer la position de celui-ci en début d'opération, de telle sorte que soient actifs les organes (9) de réception et de maintien des paillettes (p) qui sont adaptés à leur diamètre, les autres étant inactifs.

9. Machine selon l'une quelconque des revendications précédentes, adapté au remplissage de paillettes dont l'une des deux extrémités, dite distale, est obturée par un bouchon (b) initialement perméable à l'air, mais apte à devenir étanche lorsqu'il est imbibé d'un liquide, **caractérisée par le fait que** ledit poste de remplissage (5) comprend des moyens (5a) d'introduction de semence (S) à l'extrémité opposée, dite «proximale», des paillettes, ainsi que des moyens d'aspiration de la semence (S) et, le cas échéant, de la petite quantité (g) de liquide (L) introduite précédemment dans les paillettes, cette aspiration se faisant par leur extrémité distale, à travers les bouchons (b).

10. Machine selon la revendication 1, **caractérisée par le fait qu'**elle comporte un poste (6) de soudage par ultrasons de l'extrémité proximale des paillettes, situé en aval du poste de remplissage (5).

11. Machine selon la revendication 10, **caractérisée par le fait que** le poste de soudage comporte une sonotrode associée à une enclume, qui sont pourvues d'empreintes complémentaires aptes à enserrer l'extrémité proximale des paillettes, ces empreintes étant subdivisées en deux groupes alternés (600A- 610A; 600B - 610B) respectivement adaptés au soudage de paillettes (p2) de petit diamètre et de paillettes (p1) de grand diamètre, des moyens de commande étant prévus pour déplacer conjointement la sonotrode et l'enclume afin de rendre l'un des deux groupes actif, et l'autre inactif, en fonction de la catégorie de paillettes à traiter.

12. Machine selon la revendication 10 ou 11, comportant un transporteur (3) consistant en un barillet rotatif disposé en sortie de trémie et constitué de deux disques coaxiaux (30, 31) solidaires l'un de l'autre, et portant à leur périphérie des encoches (9) de réception et de maintien des paillettes, **caractérisée par Le fait qu'**elle est pourvue de deux rampes fixes (150, 151) ainsi profilées qu'elles assurent, l'une (150) l'extraction de l'extrémité proximale des paillettes hors des encoches (9) de l'un (30) des disques, juste avant que les paillettes (p) ne parviennent au poste de soudage (6) et l'autre (151) l'extraction de l'extrémité distale des paillettes hors des encoches (9) de l'autre disque (31), après que les paillettes (p) ont quitté le poste de soudage (6), de sorte que les paillettes remplies et soudées tombent alors dans un réceptacle (100).

13. Machine selon l'une quelconque des revendications précédentes, **caractérisée par le fait que** ledit transporteur (3) est un barillet rotatif disposé en sortie de trémie et constitué de deux disques coaxiaux (30,31) solidaires l'un de l'autre, dont l'écartement mutuel est sensiblement inférieur à la longueur des paillettes, et portant chacun à leur périphérie 64 encoches (9) de réception et de maintien des paillettes, chaque encoche comprenant une paroi de fond sensiblement semi-circulaire et une embouchure évasée facilitant le centrage des paillettes (p), lesdites encoches étant subdivisées en deux séries de 32 encoches adaptées à des diamètres différents, à savoir des grandes encoches (90) aptes à recevoir des paillettes ayant un diamètre externe de l'ordre de 3 mm, et des petites encoches (91) aptes à recevoir des paillettes ayant un diamètre externe de l'ordre de 2 mm, chaque série d'encoches étant répartie en huit groupes de 4 encoches, et les groupes de grandes encoches (90) étant alternés avec les groupes de petites encoches (91), l'entraxe entre deux encoches voisines étant constant sur toute la périphérie du disque et indépendant de la catégorie d'encoche concernée, cet entraxe étant avantageusement de l'ordre de 10 mm.

## Patentansprüche

1. Gerät zum Befüllen von Besamungsröhrchen (p), das einen Vorratsbehälter für leere Röhrchen (2), eine Füllstation für die Röhrchen (5) sowie eine Transportvorrichtung (3) umfasst, die mit Organen (9) zur Aufnahme und zum Halten der Röhrchen (p) versehen ist, die zum Befördern der in dem Behälter entnommenen Röhrchen ausgestaltet ist, um sie an die Füllstation (5) heranzutragen, die angepasst ist, um mindestens zwei Kategorien von Röhrchen (p1, p2) zu verarbeiten, die unterschiedliche Durchmesser aufweisen, wobei die Organe (9) zur Aufnahme und zum Halten der Röhrchen in mindestens zwei getrennte Reihen unterteilt sind, die selektiv eingesetzt werden können, wobei die Organe (90) von der einen von den zwei Reihen angepasst sind, um sich an Röhrchen (p1) mit großem Durchmesser anzupassen, während die Organe (91) der anderen Reihe angepasst sind, um sich an Röhrchen (p2) mit kleinem Durchmesser anzupassen, **dadurch gekennzeichnet, dass** der Transporter (3) endlos ist, und dadurch, dass jede Reihe von Organen (90; 91) einer gegebenen Kategorie aus mehreren Gruppen besteht, die aus einer gewissen Anzahl benachbarter Organe (90; 91) gebildet sind, wobei die Gruppen einer gegebenen Kategorie mit denjenigen der anderen abgewechselt werden, wobei die Füllstation (5) gestaltet ist, um den Satz von Röhrchen, der durch eine Gruppe benachbarter Organe unterstützt wird, gleichzeitig zu füllen, und dass es einen Elektromotor (M) umfasst, der durch einen Rechner (83) gesteuert wird und schrittweise betrieben wird, ausgestaltet ist, um den Transporter (3) mit den aufeinanderfolgenden und wiederholten Vorschubphasen mit einem kleinen Schritt, der gleich dem Wert des Achsabstands zwischen zwei benachbarten Organen (90, 91) ist, und dann mit einem großen Schritt, dessen Weite ein Vielfaches von derjenigen des kleinen Schrittes ist, und dann einer Anhaltephase anzutreiben, dass es an das Befüllen von Röhrchen angepasst ist, von denen eines der zwei Enden, das sogenannte distale, durch einen Pfropfen (b) verschlossen ist, der anfangs porös ist aber geeignet ist, dicht zu werden, wenn er mit einer Flüssigkeit getränkt ist, und dass es eine Station (4) umfasst, die der Füllstation (5) vorgeschaltet angeordnet ist, wobei diese Station (4) angepasst ist, um eine kleine Menge (g) nicht spermienabtötender und nicht in den Röhrchen haftender Flüssigkeit (L) durch ihr entgegengesetztes, das sogenannte "proximale", Ende, einzuführen.

2. Gerät nach Anspruch 1, **dadurch gekennzeichnet, dass** die Gruppen der zwei Kategorien die gleiche Anzahl Organe (90; 91) besitzen.

3. Gerät nach Anspruch 1 oder 2, **dadurch gekennzeichnet, dass** die Organe (9) Rillen oder Nuten sind, in denen die Röhrchen eingelassen sind.

4. Gerät nach Anspruch 3, **dadurch gekennzeichnet, dass** der Achsabstand zwischen den Rillen oder den Nuten (9) über die gesamte Länge des Transporters und unabhängig von seiner Kategorie konstant ist.

5. Gerät nach einem der vorhergehenden Ansprüche, **dadurch gekennzeichnet, dass** der Transporter (3) eine drehbare Trommel ist, die am Ausgang des Behälters angeordnet ist und aus zwei koaxialen Scheiben (30, 31) besteht, die fest miteinander verbunden sind, und an ihrem Umfang die Organe (9) zur Aufnahme und zum Halten der Röhrchen tragen.

6. Gerät nach einem der vorhergehenden Ansprüche, **dadurch gekennzeichnet, dass** der Behälter (2) Mittel (7, 70) zur jeweils einzelnen Verteilung der Röhrchen (p) umfasst, die mit dem Vorschub des Transporters (3) synchronisiert sind.

7. Gerät nach einem der vorhergehenden Ansprüche, **dadurch gekennzeichnet, dass** der Behälter (2) abnehmbar ist und Mittel (25, 25') zur Identifikation der Kategorie der Röhrchen, die er enthält, umfasst, während das Gerät mit Detektionsmitteln (8) ausgerüstet ist, die geeignet sind, um mit den Identifikationsmitteln (25, 25') beim Einrichten des Behälters zusammenzuwirken, um automatisch die Kategorie der zu verarbeitenden Röhrchen zu bestimmen.

8. Gerät nach Anspruch 7, **dadurch gekennzeichnet, dass** die Detektionsmittel (8) mit einer Kontroll- und Steuerschaltung (83) des Antriebsmotors (M) des Transporters (3) verbunden sind, um seine Position zu Beginn des Betriebs zu indizieren, derart, dass die Organe (9) zur Aufnahme und zum Halten der Röhrchen (p), die an ihren Durchmesser angepasst sind, aktiv sind, wobei die anderen inaktiv sind.

9. Gerät nach einem der vorhergehenden Ansprüche, das für das Befüllen von Röhrchen geeignet ist, von denen das eine der zwei Enden, das sogenannte distale, durch einen Pfropfen (b) verschlossen ist, der anfangs luftdurchlässig ist, aber geeignet ist, dicht zu werden, wenn er mit einer Flüssigkeit getränkt wird, **dadurch gekennzeichnet, dass** die Füllstation (5) Mittel (5a) zur Einführung von Samen (S) im entgegengesetzten, dem sogenannten "proximalen", Ende der Röhrchen, sowie Mittel zum Ansaugen des Samens (S) und gegebenenfalls der kleinen Menge (g) Flüssigkeit (L) umfasst, die vorhergehend in die Röhrchen eingeführt wurde, wobei dieses Ansaugen durch ihr distales Ende durch die Pfropfen (b) erfolgt.

10. Gerät nach Anspruch 1, **dadurch gekennzeichnet, dass** es eine Station (6) zum Ultraschallschweißen des proximalen Endes der Röhrchen umfasst, die sich der Füllstation (5) nachgeschaltet befindet.

11. Gerät nach Anspruch 10, **dadurch gekennzeichnet, dass** die Schweißstation eine Sonotrode umfasst, die mit einem Amboss verbunden ist, die mit ergänzenden Prägungen versehen sind, die geeignet sind, das proximale Ende der Röhrchen zu umgeben, wobei diese Prägungen in zwei abwechselnde Gruppen (600A - 610A; 600B - 610B) unterteilt sind, die jeweils an das Schweißen von Röhrchen (p2) mit kleinem Durchmesser und von Röhrchen (p1) mit großem Durchmesser angepasst sind, wobei Steuerungsmittel vorgesehen sind, um die Sonotrode und den Amboss gemeinsam zu verschieben, um die eine von den zwei Gruppen in Abhängigkeit von der Kategorie der zu verarbeitenden Röhrchen aktiv und die andere inaktiv zu machen.

12. Gerät nach Anspruch 10 oder 11, das einen Transporter (3) umfasst, der aus einer drehbaren Trommel besteht, die am Ausgang des Behälters angeordnet ist und aus zwei koaxialen Scheiben (30, 31) besteht, die fest miteinander verbunden sind, und an ihrem Umfang Nuten (9) zur Aufnahme und zum Halten der Röhrchen tragen, **dadurch gekennzeichnet, dass** es mit zwei festen Rampen (150, 151) versehen ist, die derart profiliert sind, dass die eine (150) die Entfernung des proximalen Endes der Röhrchen aus den Nuten (9) der einen (30) von den Scheiben, unmittelbar bevor die Röhrchen (p) an die Schweißstation (6) gelangen, und die andere (151) die Entfernung des distalen Endes der Röhrchen aus den Nuten (9) der anderen Scheibe (31), nachdem die Röhrchen (p) die Schweißstation (6) verlassen haben, sicherstellen, derart, dass die gefüllten und geschweißten Röhrchen dann in eine Aufnahme (100) fallen.

13. Gerät nach einem der vorhergehenden Ansprüche, **dadurch gekennzeichnet, dass** der Transporter (3) eine drehbare Trommel ist, die am Behälterausgang angeordnet ist und aus zwei koaxialen Scheiben (30, 31) besteht, die fest miteinander verbunden sind, und deren gegenseitiger Abstand im Wesentlichen kleiner ist als die Länge der Röhrchen, und die jeweils an ihrem Umfang 64 Nuten (9) zur Aufnahme und zum Halten der Röhrchen tragen, wobei jede Nut eine Bodenwand, die im Wesentlichen halbkreisförmig ist, und eine ausgeweitete Mündung umfasst, die das Zentrieren der Röhrchen (p) erleichtert, wobei die Nuten in zwei Reihen von 32 Nuten, die an unterschiedliche Durchmesser angepasst sind, nämlich große Nuten (90), die geeignet sind, Röhrchen aufzunehmen, die einen Außendurchmesser in der Größenordnung von 3 mm aufweisen, und kleine Nuten (91) unterteilt sind, die geeignet sind, Röhrchen aufzunehmen, die einen Außendurchmesser in der Größenordnung von 2 mm aufweisen, wobei jede Reihe von Nuten in acht Gruppen von 4 Nuten verteilt ist, und die Gruppen von großen Nuten (90) sich mit den Gruppen von kleinen Nuten (91) abwechseln, wobei der Achsabstand zwischen zwei benachbarten Nuten über den gesamten Umfang der Scheibe konstant ist und unabhängig von der betreffenden Kategorie von Nut ist, wobei dieser Achsabstand vorteilhafterweise in der Größenordnung von 10 mm liegt.

## Claims

1. A machine for filling artificial insemination straws (p) with semen, which comprises a hopper for storing empty straws (2), a straw-filling station (5), and a transport device (3) provided with elements (9) for receiving and holding the straws (p), and configured for conveying straws taken in the hopper to present them to the filling station (5), **characterised in that** it is adapted for processing at least two categories of straws (p1, p2) having different diameters, said elements (9) for receiving and holding the straws being subdivided into at least two distinct series which can be employed selectively, the elements (90) of one of the two series conforming to adapt to large-diameter straws (p1), whereas the elements (91) of the other series conforming to adapt to small-diameter straws (p2), **characterized in that** said transporter (3) is endless, and each series of elements (90; 91) of a given category is composed of several groups formed from a certain number of adjacent elements (90; 91), the groups of a given category alternating with those of the other, the filling station (5) being designed to simultaneously fill the batch of straws supported by a group of adjacent elements, and **in that** it comprises an electric motor (M) controlled by a computer (83) and operating step by step, configured to drive the transporter (3) with successive and repeated phases of advance, at a low pitch equal to the value of the center distance between two adjacent elements (90, 91), then at a high pitch, of an amplitude multiple that of the low pitch, then a stop phase, **in that** it is adapted to filling straws one of the two ends of which, so-called distal, is blocked by an initially porous stopper (b), but capable of becoming watertight when it is soaked in a liquid, and **in that** it comprises a station (4) placed upstream of the filling station (5), this station (4) being adapted to introduce a small quantity (g) of non-spermicidal and non-adherent liquid (L) into the straws, via their opposite end, the so-called "proximal" end.

2. The machine as claimed in Claim 1, **characterised in that** the groups of the two categories have the same number of elements (90; 91).

3. The machine as claimed in Claim 1 or 2, **characterised in that** said elements (9) are grooves or notches in which the straws are fitted.

4. The machine as claimed in Claim 3, **characterised in that** the axle spacing between the grooves or the notches (9) is constant over the entire length of the transporter, and independent of its category.

5. The machine as claimed in any one of the preceding claims, **characterised in that** the transporter (3) is a rotating barrel placed at the hopper outlet and constituted by two coaxial discs (30, 31) integral with one another, and bearing said elements (9) for receiving and holding the straws at their periphery.

6. The machine as claimed in any one of the preceding claims, **characterised in that** said hopper (2) comprises means for (7, 70) distributing straws (p) one by one, which are synchronised with the advance of the transporter (3).

7. The machine as claimed in any one of the preceding claims, **characterised in that** said hopper (2) is removable and comprises means (25, 25') for identification of the category of the straws which it contains, whereas the machine is equipped with detection means (8) for cooperating with said identification means (25, 25') during placing of the hopper, so as to automatically determine the category of the straws to be processed.

8. The machine as claimed in Claim 7, **characterised in that** said detection means (8) are connected to a control and command circuit (83) of the drive motor (M) of the transporter (3), so as to index the position of the latter on startup, such that the elements (9) for receiving and holding the straws (p) which are adapted to their diameter are active, the others being inactive.

9. The machine as claimed in any one of the preceding claims, adapted to filling straws whereof one of the two ends, the so-called distal end, is blocked by a stopper (b) initially permeable to air, but capable of becoming watertight when it is soaked in a liquid, **characterised in that** said filling station (5) comprises means (5a) for introduction of semen (S) at the opposite end, so-called "proximal", of the straws, as well as means for suctioning semen (S) and, if necessary, the small quantity (g) of liquid (L) introduced previously into the straws, this suctioning being carried out via their distal end, through the stoppers (b).

10. The machine as claimed in Claim 1, **characterised in that** it comprises an ultrasound welding station (6) for the proximal end of the straws, located downstream of the filling station (5).

11. The machine as claimed in Claim 10, **characterised in that** the welding station comprises a sonotrode connected to an anvil, provided with complementary indentations for gripping the proximal end of the straws, these indentations being subdivided into two alternating groups (600A - 610A; 600B - 610B) respectively adapted to the welding of small-diameter straws (p2) and large-diameter straws (p1), control means being provided to shift the sonotrode and the anvil together in order to make one of the two groups active, and the other inactive, as a function of the category of straws to be processed.

12. The machine as claimed in Claim 10 or 11, comprising a transporter (3) consisting of a rotating barrel placed at the hopper outlet and constituted by two coaxial discs (30, 31) integral with one another, and bearing at their periphery notches (9) for receiving and holding straws, **characterised in that** it is provided with two fixed ramps (150, 151) profiled in such a way that one (150) ensures extraction of the proximal end of the straws from the notches (9) of one (30) of the discs, just before the straws (p) arrive at the welding station (6) and the other (151) ensures extraction of the distal end of the straws from the notches (9) of the other disc (31), after the straws (p) have left the welding station (6), such that the filled and welded straws then fall into a receptacle (100) .

13. The machine as claimed in any one of the preceding claims, **characterised in that** said transporter (3) is a rotating barrel placed at the hopper outlet and constituted by two coaxial discs (30, 31) integral with one another, whereof the mutual clearance is substantially less than the length of the straws, and each bearing at their periphery 64 notches (9) for receiving and holding straws, each notch comprising a substantially semi-circular base wall and a flared mouthpiece facilitating the centring of the straws (p), said notches being subdivided into two series of 32 notches adapted to different diameters, specifically large notches (90) for receiving straws having an external diameter of the order of 3 mm, and small notches (91) for receiving straws having an external diameter of the order of 2 mm, each series of notches being distributed into eight groups of 4 notches, and the groups of large notches (90) being alternating with the groups of small notches (91), the axle spacing between two adjacent notches being constant over the entire periphery of the disc and independent of the category of notch concerned, this axle spacing advantageously being of the order of 10 mm.
